# EUROPEAN PATENT SPECIFICATION

(11) **EP 4 044 409 B1**
(45) Date of publication and mention of the grant of the patent: **06.12.2023**
(21) Application number: 20907924.3
(22) Date of filing: 10.10.2020
(51) Int. Cl.: H02K 5/00, H01R 39/38, H01R 39/40, H01R 39/36, H01R 39/26

(54) **MOTOR BRUSH, MOTOR AND WASHING MACHINE**
MOTORBÜRSTE, MOTOR UND WASCHMASCHINE
BALAI DE MOTEUR, MOTEUR ET MACHINE À LAVER

(30) Priority: 24.12.2019 CN 201911345695
(43) Date of publication of application: 17.08.2022
(73) Proprietor: Welling (Wuhu) Motor Manufacturing Co., Ltd., Wuhu, Anhui 241009 (CN)
(72) Inventor: ZHU, Xiaogang, Wuhu, Anhui 241009 (CN); WANG, Junben, Wuhu, Anhui 241009 (CN); TANG, Jianwu, Wuhu, Anhui 241009 (CN)
(74) Representative: RGTH
(86) International application number: PCT/CN2020/120222
(87) International publication number: WO 2021/129047

(56) References cited:
- EP-A2- 1 124 306
- WO-A2-2012/041911
- CN-A- 103 746 495
- CN-A- 103 746 496
- CN-A- 103 746 496
- CN-U- 202 260 758
- CN-U- 205 583 897
- KR-A- 20060 006 323
- US-A- 5 644 182
- US-A- 5 804 903
- US-A1- 2004 080 231

## Description

### FIELD

The present disclosure relates to the field of motors, and in particular, to a motor brush, a motor and a washing machine.

### BACKGROUND

In the related art, a motor brush used in a washing machine includes an upper brush holder, a lower brush holder, a copper sleeve, an electric brush and the like. The number of parts and components is large, and manufacturing process is complicated.

In addition, the upper brush holder and the lower brush holder are made of plastic parts. During an operation of the washing machine, the motor brush generates a large amount of heat, which causes the plastic brush holders to be at risk of being melted.
US 2004/080231 A1 discloses a brush assembly of an alternator for a vehicle including a brush holder including a hollow brush holder body, and wired brushes each received in the brush holder, and adapted to be urged against a slip ring fitted around a rotor shaft by a spring along an axis of the slip ring, thereby coming into elastic contact with the slip ring to obtain an electrical connection to an external electrical device, each of the wired brushes consisting of a brush, and a lead wire electrically connected to the brush.
KR 2006 0006323 A relates to a brush holder of a vacuum cleaner motor consisting of a fixing part that is fixed and coupled to the motor housing to be close to the rotor assembly, and a support part that is integrally molded into the fixing part and inserted so that the brush slides toward the rotor assembly. In addition, by forming a heat dissipation slit in the support part of the brush holder, the heat generated by the brush can be easily dissipated, thereby increasing the motor efficiency.
WO 2012/041911 A2 relates to a carbon brush module, comprising a brush holder for receiving a carbon brush and for arranging the carbon brush on a surface of a brush support of an electric motor, such that the carbon brush extends parallel to an attachment plane of the brush support, and the carbon brush can make contact with a current conductor via a contact device which is connected to the carbon brush in an electrically conducting manner and penetrates a wall of the brush holder, wherein the brush holder comprises an attachment device for attaching the brush holder on the brush support and a guide device for longitudinally displaceably guiding the carbon brush in the brush holder, wherein both the attachment device and the guide device of the brush holder are formed by a receiving part produced as one piece from an insulating material.
US 5 644 182 A discloses a brush holder apparatus and method for biasing a brush outwardly of a brush box. A brush box cover is slidingly disposed over an electrical cable along with a coil spring. Next, a brush shunt is electrically secured to an end portion of the electrical cable by a crimp member. The brush box cover is then slidably urged towards a brush secured at a terminal end of the brush shunt. This causes the brush shunt to be folded so as to place it in general longitudinal alignment and parallel with the electrical cable.

### SUMMARY

In order to solve at least one of the above technical problems, an object of the present disclosure is to provide a motor brush.

Another object of the present disclosure is to provide a motor.

A further another object of the present disclosure is to provide a washing machine.

In order to achieve the above purpose, a first aspect of the present disclosure provides a motor brush. The motor brush includes: a brush holder defining an accommodating chamber and provided with a first fixing portion; and a brush partially located within the accommodating chamber and provided with a second fixing portion. The first fixing portion is assembled with the second fixing portion such that the brush is fixed on the brush holder.

In this embodiment, the motor brush is formed by assembling the separate brush holder and the brush, and the first fixing portion provided on the brush holder is engaged with the second fixing portion on the brush to implement a secure assembly of the motor brush. Thus, compared with a motor brush applied to a washing machine in the related art, a structural arrangement of the motor brush of the present disclosure can be simplified while ensuring reliability of the motor brush. Further, assembling steps can be reduced, thereby realizing optimization of manufacturing process of the motor brush.

Here, the brush holder may be an integrally formed structure.

The first fixing portion and the second fixing portion that are engaged with each other may be matching snapping piece and snapping slot, matching male and female buckles, a shaft and a shaft sleeve in an interference fit, or the like. In addition, the brush may be fixed on the brush holder by additional fixing members.

In the embodiments as described, the accommodating chamber passes through an end of the brush holder to define a first port. The brush includes a carbon rod having a first end extending out of the accommodating chamber through the first port, and a terminal connected to a second end of the carbon rod and being provided with the second fixing portion.

According to the invention, the brush includes the carbon rod and the terminal. The carbon rod extends out of one end of the accommodating chamber, and the terminal is arranged at an other end of the accommodating chamber. The terminal fixes the carbon rod, and a fixed connection with the brush holder can be implemented by the second fixing portion, thereby eliminating a copper sleeve arranged in the motor brush in the related art, and thus saving arrangement cost, and ensuring reliability of an operation of the brush.

Here, the terminal may be a sheet metal structural member or a machined structural member.

In any one of the embodiments as described, the first fixing portion includes a first engagement portion provided on an outer side wall of the brush holder, and the second fixing portion includes a second engagement portion defined by the terminal. One of the first engagement portion and the second engagement portion is a snapping slot, and the other of the first engagement portion and the second engagement portion is a snapping sheet structure engaged with the snapping slot. The first engagement portion is engaged with the second engagement portion in such a manner that the brush is fixed on the brush holder.

In this embodiment, by arranging the first fixing portion and the second fixing portion as a relatively cooperating engagement structure including the first engagement portion and the second engagement portion, a fixing manner can be effectively simplified while ensuring the fixing reliability.

Here, the snapping slot may be defined on the terminal, and the snapping sheet structure may be provided on the brush holder Alternatively, the snapping slot may be defined on the brush holder, and the snapping sheet structure may be provided on the terminal 206.

In any one of the embodiments as described, the accommodating chamber extends to two ends of the brush holder to define a second port at the other end of the brush holder. The brush holder has a first outer side wall and a second outer side wall that are opposite to each other, and at least either the first outer side wall or a second outer side wall has a lateral boss provided thereon. The snapping slot is formed on the lateral boss. The terminal includes a main sheet body and a tongue sheet structure that are connected to each other. The tongue sheet structure is formed by being bent relative to the main sheet body. The main sheet body matches with the second port. The snapping sheet structure includes an elastic snapping piece arranged on the tongue sheet structure. The tongue sheet structure is inserted into the corresponding snapping slot from an outer end face of the lateral boss in such a manner that the elastic snapping piece is compressed, and after the tongue sheet structure partially passes through the snapping slot, the elastic snapping piece is restored and is limited by an inner end face of the lateral boss.

In this embodiment, the terminal is specifically a sheet metal part. Thus, the main sheet body and the tongue sheet structure arranged on either or both sides of the main sheet body may be formed through a process such as bending and punching process. After the elastic snapping piece is punched from the tongue sheet structure, the tongue sheet structure is engaged with the snapping slot to implement a mounting of the brush, so as to implement the fixing of the brush by the limiting generated between the elastic snapping piece and the inner end face of the lateral boss.

In any one of the embodiments as described, the lateral boss is arranged on each of the first outer side wall and the second outer side wall. The tongue sheet structure includes a first tongue piece and a second tongue piece that are arranged on both sides of the main sheet body. An angle formed between the first tongue piece and the main sheet body is at least 90°, and/or an angle formed between the second tongue piece and the main sheet body is at least 90°.

In this embodiment, as a preferred embodiment, the tongue sheet structure includes a first tongue piece and a second tongue piece arranged on both sides of the main sheet body. Each of the first outer side wall and the second outer side wall has the lateral boss provided thereon, and each of the lateral boss has the snapping slot defined thereon (including a first snapping slot and a second snapping slot). Here, the first tongue piece and the first snapping slot that are arranged on the same side are engaged with each other, and the second tongue piece and the second snapping slot that are arranged on the same side are engaged with each other, to ensure the stability of the fixing of the terminal.

In addition, by defining a bending angle of the tongue sheet structure, it is possible to ensure that the first tongue piece and/or the second tongue piece are in a tendency to expand outwards, which in turn ensures reliability of the engagement after the tongue sheet structure is inserted into the corresponding snapping slot from the outer end face of the lateral boss.

In any one of the embodiments as described, the second port defines a terminal mounting groove. The main sheet body is arranged within the terminal mounting groove. The terminal further includes a limiting piece connected to the main sheet body. The limiting piece extends towards a bottom surface of the terminal mounting groove.

In any one of the embodiments as described, the main sheet body has an outer surface recessed inwardly relative to an outer end surface of the second port.

In this embodiment, by defining the terminal mounting groove on the end face of the second port, the terminal can be fixed in the terminal mounting groove by the terminal mounting groove. Further, the outer surface of the main sheet body is recessed inwardly relative to the outer end surface of the second port, and the limiting piece abuts with the bottom surface of the terminal mounting groove. Therefore, the secure mounting of the terminal can be implemented, and it is possible to prevent an outer contour size of the motor brush from being increased due to the arrangement of the terminal, thereby ensuring a miniaturized arrangement of the motor brush.

Specifically, from the first port to the second port, the brush sequentially includes a main body, a shaft, an elastic member sleeved on the shaft, and the terminal. The shaft and the elastic member are located within the accommodating chamber of the brush holder. The main body extends outward from the first port, and the terminal is fixed in the terminal mounting groove defined on the end face of the second port. Through the engagement between the tongue sheet structure and the snapping slot on the lateral boss on the brush holder, the brush can be fixed on the brush holder.

In any one of the embodiments as described, either the first outer side wall or the second outer side wall is further provided with a lateral lug. The lateral lug is arranged between the first port and the second port and the lateral lug being provided with a mounting through hole. The mounting through hole is used for a connection with an external motor component.

In this embodiment, the fixed connection with other components of the motor is implemented by arranging the lateral lug and the mounting through hole defined on the lateral lug. In any one of the embodiments as described, the carbon rod includes a main body and a shaft that are connected to each other. The main body matches with the accommodating chamber and extending to an outside of the accommodating chamber through the first port. The shaft is connected to the terminal. The brush further includes an elastic member sleeved on the shaft and disposed within the accommodating chamber together with the shaft.

In this embodiment, the brush includes the carbon rod, the elastic member and the terminal. The carbon rod extends out of one end of the accommodating chamber, and the terminal is arranged at the other end of the accommodating chamber. The carbon rod includes the main body and the shaft that are axially connected to each other, and the elastic member is sleeved on the shaft, so that the main body of the carbon rod extending out of the accommodating chamber can be brought into continuous contact with a commutator of a motor by a return force generated by the compressed elastic member. The terminal is fixes the carbon rod, and a fixed connection with the brush holder can be implemented by the second fixing portion, thereby eliminating a copper sleeve arranged in the motor brush in the related art, and thus saving arrangement cost and ensuring the reliability of the operation of the brush.

In any one of the embodiments as described, the brush holder has a toner baffle close to the first port and a terminal baffle close to the second port.

In this embodiment, by arranging the toner baffle and the terminal baffle, it is possible to prevent a toner generated by the carbon rod due to abrasion of the carbon rod from entering the accommodating chamber.

In any one of the embodiments as described, the brush holder further has a heat dissipation hole defined thereon. The heat dissipation hole is in communication with the accommodating chamber. The heat dissipation hole includes at least a type of the followings: oblong holes, rectangular holes, or mesh holes.

In this embodiment, by arranging the heat dissipation hole, it is possible to prevent heat generated by the carbon rod due to the abrasion of carbon rod from excessively raising a temperature, which is beneficial to prolong service life of the motor brush.

In any one of the embodiments as described, the brush holder is configured as a thermoset material member.

In this embodiment, through forming the brush holder 10 from a thermosetting material due to its high temperature resistance and low cost, on the one hand, reliability of the motor brush during the operation can be improved, and risk of being melted can be reduced, on the other hand, it is also beneficial to reduce an overall manufacturing cost of the motor brush.

Specifically, the thermosetting material includes phenolic plastics, epoxy plastics, amino plastics, alkyd plastics, and the like.

Embodiments of a second aspect of the present disclosure provides a motor. The motor includes: a motor housing defines a mounting chamber, the motor housing including a motor end cover; a motor body accommodated in the mounting chamber; and the motor brush according to any one of the embodiments as described, the motor brush being fixed on the motor end cover.

In this embodiment, since the motor according the present disclosure includes the motor brush as described in the above embodiments, it is beneficial to reduce manufacturing cost of the motor and to maintain operation reliability of the motor.

Embodiments of a third aspect of the present disclosure provides a washing machine. The washing machine includes a tub, and the motor according to any one of the embodiments as described. The motor is connected to the tub, and the motor drives the tub to rotate.

In this embodiment, since the washing machine according to the present disclosure includes the motor as described above, manufacturing cost of the washing machine can also be reduced, and stable operation of a driving device in the washing machine can be improved.

Here, the washing machine is a drum washing machine.

Additional aspects and advantages of the present disclosure will be set forth in the following description, and in part will be apparent from the description below, or learned by practice of the present disclosure.

### BRIEF DESCRIPTION OF DRAWINGS

The above and/or additional aspects and advantages of the present disclosure will become apparent and readily understood from the following description of embodiments in conjunction with the accompanying drawings, wherein:
FIG. 1 illustrates a structural schematic view of a motor brush according to an embodiment of the present disclosure;
FIG. 2 illustrates a partial structural schematic view at part A in FIG. 1;
FIG. 3 illustrates a structural schematic view of a brush holder according to an embodiment of the present disclosure;
FIG. 4 illustrates a structural schematic view of a brush according to an embodiment of the present disclosure;
FIG. 5 illustrates a structural schematic view of a brush holder according to another embodiment of the present disclosure;
FIG. 6 illustrates a structural schematic view of a motor brush according to another embodiment of the present disclosure;
FIG. 7 illustrates a cross-sectional structural schematic view in a first direction in FIG. 6;
FIG. 8 illustrates a cross-sectional structural schematic view in a second direction in FIG. 6;
FIG. 9 illustrates a partial structural schematic view at part B in FIG. 8;
FIG. 10 illustrates a structural schematic view of a brush holder according to another embodiment of the present disclosure;
FIG. 11 illustrates a structural schematic view of a terminal according to an embodiment of the present disclosure;
FIG. 12 illustrates a schematic top view of the terminal shown in FIG. 11.

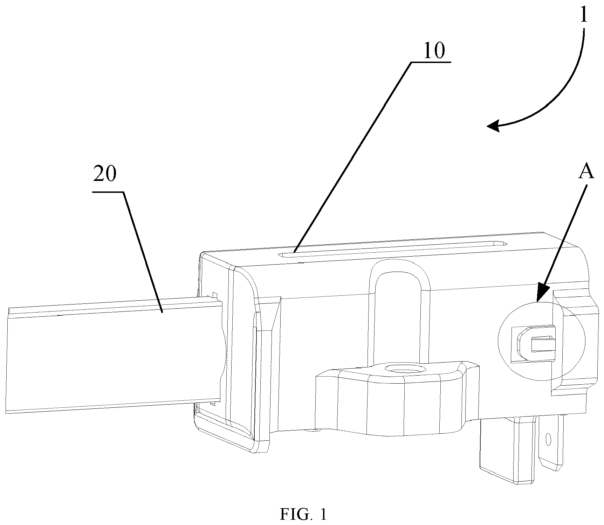

The corresponding relationship between the reference signs and the component in FIGS. 1 to 12 is as follows:

| Referenc e Sign | Compone nt | Referenc e Sign | Component | Referenc e Sign | Component |
|---|---|---|---|---|---|
| 1 | motor brush | 10 | brush holder | 102 | accommodatin g chamber |
| 20 | brush | 202 | carbon rod | 2022 | main body portion |
| 2024 | shaft | 204 | elastic member | 206 | terminal |
| 104 | lateral boss | 1042 | snapping slot | 2062 | main sheet body |
| 2064 | tongue sheet structure | 2066 | elastic snapping piece | 2068 | limiting piece |
| 108 | lateral lug | 1082 | mounting through hole | 110 | toner baffle |
| 112 | terminal baffle | 114 | heat dissipatio n hole | 106 | terminal mounting groove |
| 2064a | first tongue piece | 2064b | second tongue piece | | |

### DESCRIPTION OF EMBODIMENTS

In order to more clearly understand the above objects, features and advantages of the present disclosure, the present disclosure will be further described in detail below with reference to the accompanying drawings and specific embodiments. It should be noted that the embodiments of the present disclosure and the features in the embodiments may be combined without conflicting with each other.

Many specific details are set forth in the following description to facilitate a complete understanding of the present disclosure. However, the present disclosure may also be implemented in other ways different from those described herein. Therefore, the scope of the present disclosure is not limited by the specific embodiments disclosed below.

### First Embodiment

As shown in FIG. 1, a motor brush 1 according to an embodiment of the present disclosure includes a brush holder 10 and a brush 20.

The brush holder 10 defines an accommodating chamber 102 therein and has a first fixing portion provided thereon.

The brush 20 is partially located in the accommodating chamber 102 and has a second fixing portion provided thereon. The first fixing portion is assembled with the second fixing portion in such a manner that the brush 20 is fixed on the brush holder 10.

In this embodiment, the motor brush 1 is formed by assembling the separate brush holder 10 and the brush 20, and the first fixing portion provided on the brush holder 10 is assembled with the second fixing portion on the brush 20 to implement a secure assembly of the motor brush 1. Thus, compared with a motor brush 1 applied to a washing machine in the related art, a structural arrangement of the motor brush 1 of the present disclosure can be simplified while ensuring reliability of the motor brush 1. Further, assembling steps can be reduced, thereby realizing optimization of manufacturing process of the motor brush 1.

The brush holder 10 may be an integrally formed structure.

The first fixing portion and the second fixing portion that are engaged with each other may be matching snapping piece and snapping slot 1042, matching male and female buckles, a shaft and a shaft sleeve in an interference fit, or the like. In addition, the brush 20 may be fixed on the brush holder 10 by additional fixing members.

In the above embodiment, the accommodating chamber 102 may pass through both ends of the brush holder 10 to define a first port and a second port on the accommodating chamber 102.

Specifically, the brush includes a carbon rod having a first end extending out of the accommodating chamber through the first port, and a terminal connected to a second end of the carbon rod and having the second fixing portion provided thereon.

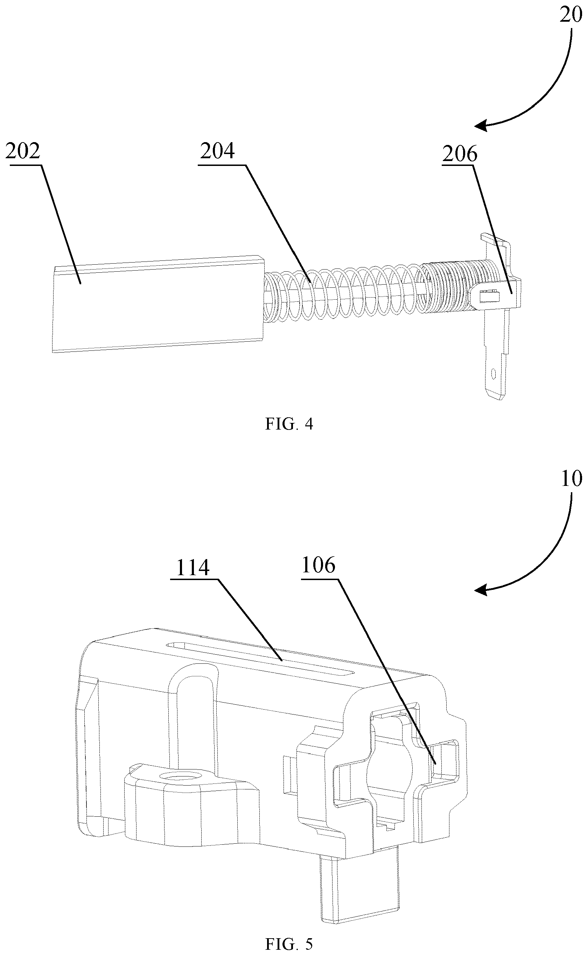

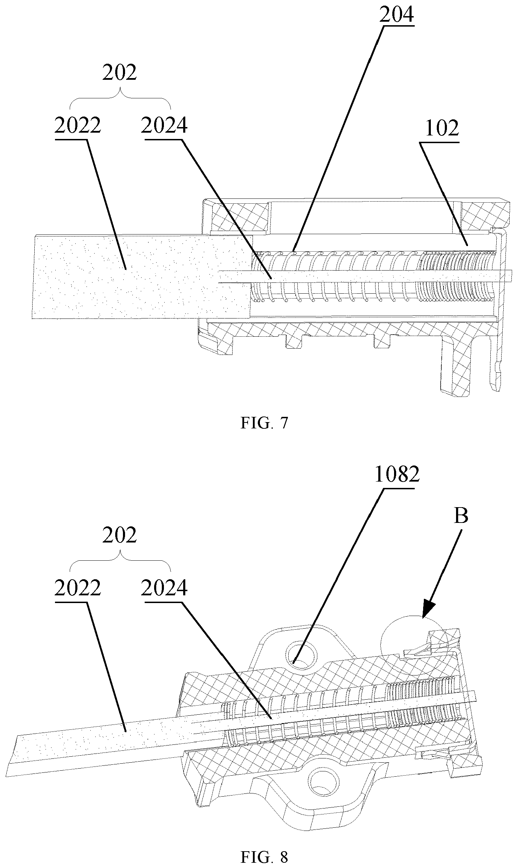

As shown in FIG. 4, the carbon rod 202 is further defined. The carbon rod 202 includes a main body 2022 and a shaft 2024 connected to each other. As shown in FIG. 8, the main body 2022 is configured to match with the accommodating chamber 102 and extends to an outside of the accommodating chamber 102 through the first port; an elastic member 204 is sleeved on the shaft 2024 and is located within the accommodating chamber 102 together with the shaft 2024; a terminal 206 is connected to an end of the shaft 2024 facing away from the main body 2022, and has the second fixing portion provided thereon.

The brush 20 includes the carbon rod 202, the elastic member 204 and the terminal 206. The carbon rod 202 extends out of one end of the accommodating chamber 102, and the terminal 206 is arranged at the other end of the accommodating chamber 102. The carbon rod 202 includes the main body 2022 and the shaft 2024 that are axially connected to each other, and the elastic member 204 is sleeved on the shaft 2024, so that the main body 2022 of the carbon rod 202 extending out of the accommodating chamber 102 can be brought into continuous contact with a commutator of a motor by a return force generated by the compressed elastic member 204. The terminal 206 is configured to fix the carbon rod 202, and a fixed connection with the brush holder 10 can be implemented by the second fixing portion, thereby eliminating a copper sleeve arranged in the motor brush 1 in the related art, and thus saving arrangement cost, and ensuring the reliability of the operation of the brush 20.

The terminal 206 may specifically be a sheet metal structural member or a machined structural member.

In any of the above embodiments, the first fixing portion includes a first engagement portion provided on an outer side wall of the brush holder 10, and the second fixing portion includes a second engagement portion defined by the terminal 206. One of the first engagement portion and the second engagement portion is a snapping slot 1042, and the other of the first engagement portion and the second engagement portion is a snapping sheet structure engaged with the snapping slot 1042. Here, the first engagement portion is engaged with the second engagement portion in such a manner that the brush 20 is fixed on the brush holder 10.

In this embodiment, by arranging the first fixing portion and the second fixing portion as a relatively cooperating engagement structure including the first engagement portion and the second engagement portion, a fixing manner can be effectively simplified while ensuring the fixing reliability.

The snapping slot 1042 may be defined on the terminal 206, and the snapping sheet structure may be provided on the brush holder 10. Alternatively, the snapping slot 1042 may be defined on the brush holder 10, and the snapping sheet structure may be provided on the terminal 206.

### Second Embodiment

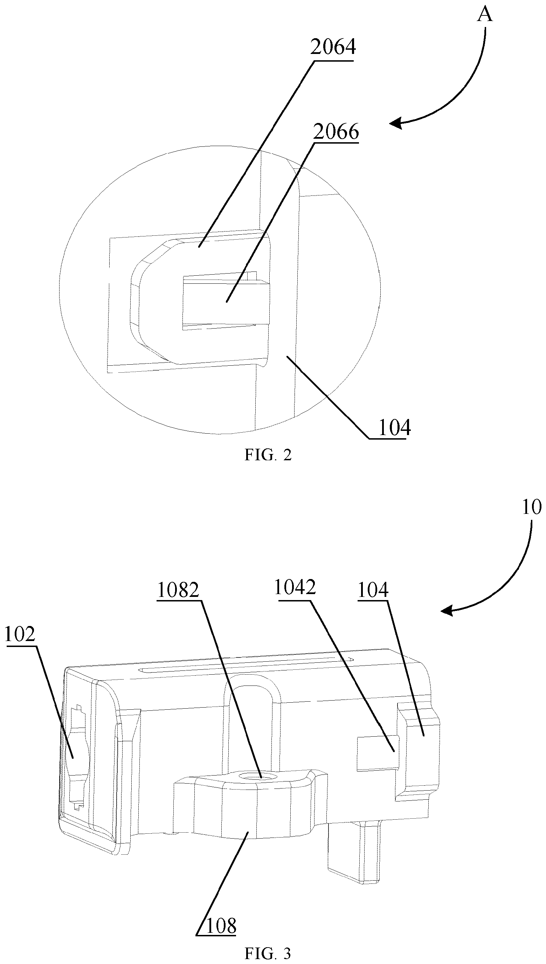

On the basis of the Embodiment 1, structures of the first fixing portion on the brush holder 10 and the second fixing portion on the mating terminal 206 are further described. As shown in FIG. 3, the burh holder 10 may also include a lateral boss 104 provided on at least one of opposite first and second outer side walls. The lateral boss 104 has a snapping slot 1042 defined thereon.

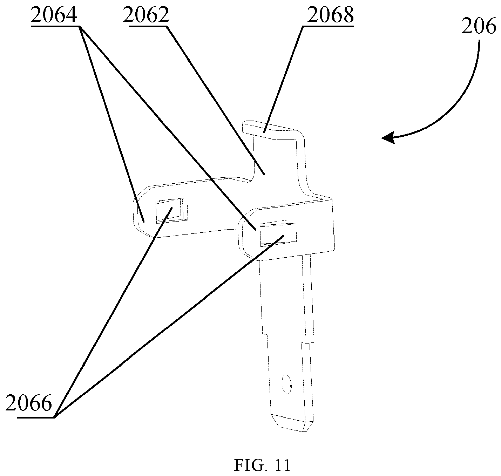

As shown in FIG. 11, the terminal 206 includes a main sheet body 2062 and a tongue sheet structure 2064 connected to each other. The tongue sheet structure 2064 is formed by being bent relative to the main sheet body 2062. The main sheet body 2062 may match with the second port, and the snapping sheet structure includes an elastic snapping piece 2066 arranged on the tongue sheet structure 2064.

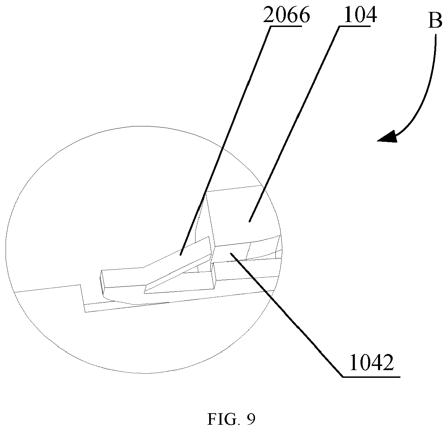

The tongue sheet structure 2064 is inserted into the corresponding snapping slot 1042 from an outer end face of the lateral boss 104 in such a manner that the elastic snapping piece 2066 is compressed, to allow the tongue sheet structure 2064 to partially pass through the snapping slot 1042. As shown in FIG. 2, the elastic snapping piece 2066 is restored and is limited by an inner end face of the lateral boss 104. Further, FIG. 9 shows a schematic view of the elastic snapping piece 2066 including an internal structure of the snapping slot 1042 and the inner end face of the lateral boss 104 forming a limiting in position.

In this embodiment, the terminal 206 is specifically a sheet metal part. Thus, the main sheet body 2062 and the tongue sheet structure 2064 arranged on either or both sides of the main sheet body 2062 may be formed through a process such as bending and punching process. After the elastic snapping piece 2066 is punched from the tongue sheet structure 2064, the tongue sheet structure 2064 is engaged with the snapping slot 1042 to implement a mounting of the brush 20, so as to implement the fixing of the brush 20 by the limiting generated between the elastic snapping piece 2066 and the inner end face of the lateral boss 104.

In any of the above embodiments, each of the first outer side wall and the second outer side wall has the lateral boss 104 provided thereon. The tongue sheet structure 2064 includes a first tongue piece 2064A and a second tongue piece 2064B arranged on both sides of the main sheet body 2062, an angle formed between the first tongue piece 2064A and the main sheet body is at least 90°, and/or an angle formed between the second tongue piece 2064B and the main sheet body is at least 90°.

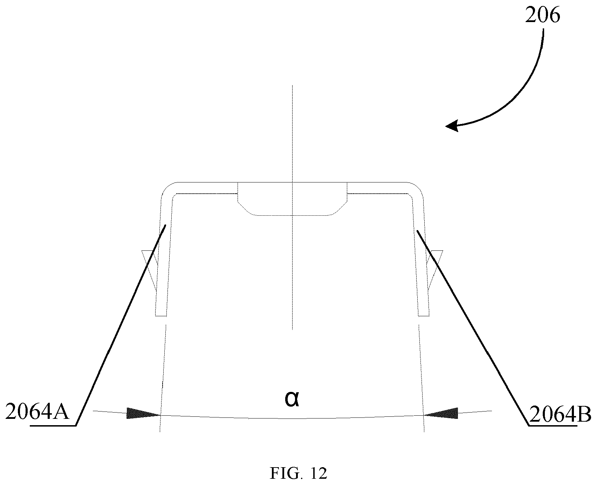

As shown in FIG. 12, preferably, the angle formed between the first tongue piece 2064A and the main sheet body is at least 90°, and the angle formed between the second tongue piece 2064B and the main sheet body is at least 90°. That is, an angle α formed between the first tongue piece 2064A and the second tongue piece 2064B in FIG. 12 is at least 0°.

In addition, the main sheet body has a center symmetry plane, and the second tongue piece 2064B and the first tongue piece 2064A are symmetrically arranged with respect to the center symmetry plane.

In this embodiment, as a preferred embodiment, the tongue sheet structure 2064 includes a first tongue piece 2064A and a second tongue piece 2064B arranged on both sides of the main sheet body 2062. Each of the first outer side wall and the second outer side wall has the lateral boss 104 provided thereon, and each of the lateral boss 104 has the snapping slot 1042 defined thereon (including a first snapping slot 1042 and a second snapping slot 1042). Here, the first tongue piece 2064A and the first snapping slot 1042 that are arranged on the same side are engaged with each other, and the second tongue piece 2064B and the second snapping slot 1042 that are arranged on the same side are engaged with each other, to ensure the stability of the fixing of the terminal 206.

In addition, by defining a bending angle of the tongue sheet structure, it is possible to ensure that the first tongue piece 2064A and/or the second tongue piece 2064B are in a tendency to expand outwards, which in turn ensures reliability of the engagement after the tongue sheet structure 2064 is inserted into the corresponding snapping slot 1042 from the outer end face of the lateral boss 104.

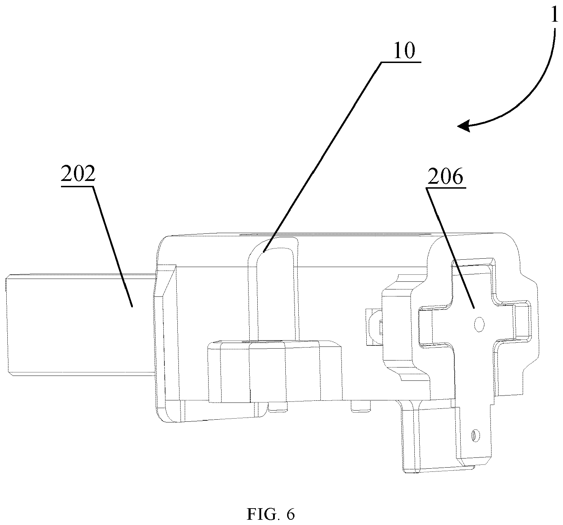

In any of the above embodiments, an engagement structure between the terminal 206 in the brush 20 and the brush holder 10 is further described. As shown in FIG. 5, the second port may define a terminal mounting groove 106. As shown in FIG. 6, the main sheet body 2062 may be arranged in the terminal mounting groove 106, and the terminal 206 further includes a limiting piece 2068 connected to the main sheet body 2062. The limiting piece 2068 is capable of extending towards a bottom surface of the terminal mounting groove 106.

In any of the above embodiments, as shown in FIG. 7, the main sheet body 2062 has an outer surface recessed inwardly relative to an outer end surface of the second port.

In this embodiment, by defining the terminal mounting groove 106 on the end face of the second port, the terminal 206 can be fixed in the terminal mounting groove 106 by the terminal mounting groove 106. Further, the outer surface of the main sheet body 2062 is recessed inwardly relative to the outer end surface of the second port, and the limiting piece 206 abuts with the bottom surface of the terminal mounting groove 106. Therefore, the secure mounting of the terminal 206 can be implemented, and it is possible to prevent an outer contour size of the motor brush 1 from being increased due to the arrangement of the terminal 206, thereby ensuring a miniaturized arrangement of the motor brush 1.

Specifically, from the first port to the second port, the brush 20 sequentially includes a main body 2022, a shaft 2024, an elastic member 204 sleeved on the shaft 2024, and the terminal 206. The shaft 2024 and the elastic member 204 are located within the accommodating chamber 102 of the brush holder 10. The main body 2022 may extend outward from the first port, and the terminal 206 is fixed in the terminal mounting groove 106 defined on the end face of the second port. Through the engagement between the tongue sheet structure 2064 and the snapping slot 1042 on the lateral boss 104 on the brush holder 10, the brush 20 can be fixed on the brush holder 10.

### Three Embodiment

As shown in FIG. 3, in any of the above embodiments, at least one of the first outer side wall and the second outer side wall further has a lateral lug 108 provided thereon. The lateral lug 108 is arranged between the first port and the second port, and has a mounting through hole 1082 defined thereon. The mounting through hole 1082 is used for a connection with an external motor component.

In this embodiment, the fixed connection with other components of the motor is implemented by arranging the lateral lug 108 and the mounting through hole 1082 defined on the lateral lug 108.

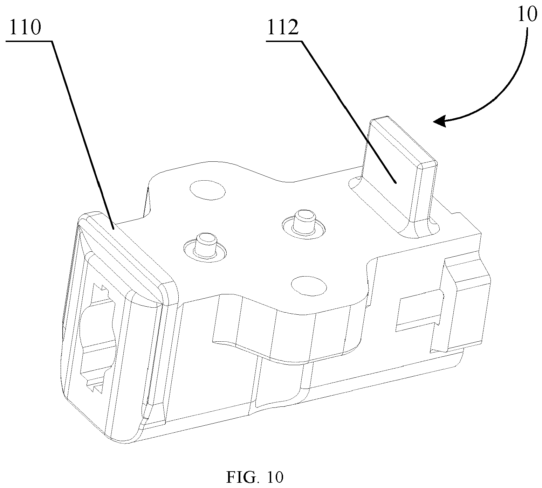

As shown in FIG. 10, in any of the above embodiments, the brush holder 10 has a toner baffle 110 close to the first port and a terminal baffle 112 close to the second port.

As shown in FIG. 5, in this embodiment, by arranging the toner baffle 110 and the terminal baffle 112, it is possible to prevent a toner generated by the carbon rod 202 due to abrasion of the carbon rod 202 from entering the accommodating chamber 102.

In any of the above embodiments, the brush holder 10 further has a heat dissipation hole 114 defined thereon. The heat dissipation hole 114 is in communication with the accommodating chamber 102. Here, the heat dissipation hole 114 includes at least one of an oblong hole, a rectangular hole or multiple mesh holes.

In this embodiment, by arranging the heat dissipation hole 114, it is possible to prevent heat generated by the carbon rod 202 due to the abrasion of carbon rod 202 from excessively raising a temperature, which is beneficial to prolong service life of the motor brush 1.

In any of the above embodiments, the brush holder 10 is configured as a thermoset material member.

In this embodiment, through forming the brush holder 10 from a thermosetting material due to its high temperature resistance and low cost, on the one hand, reliability of the motor brush 1 during the operation can be improved, and risk of being melted can be reduced, on the other hand, it is also beneficial to reduce an overall manufacturing cost of the motor brush 1.

Specifically, the thermosetting material includes phenolic plastics, epoxy plastics, amino plastics, alkyd plastics, and the like.

### Fourth Embodiment

A motor according to an embodiment of the present disclosure includes: a motor housing configured to define a mounting chamber, the motor housing including a motor end cover; a motor body accommodated within the mounting chamber; and the motor brush according to any one of the embodiments in the first aspect of the present disclosure, the motor brush being fixed on the motor end cover.

In this embodiment, since the motor according the present disclosure includes the motor brush as described in the above embodiments, it is beneficial to reduce manufacturing cost of the motor and to maintain operation reliability of the motor.

### Fifth Embodiment

A washing machine according to an embodiment of the present disclosure includes a tub, and the motor according to any one of the above embodiments, the motor being connected to the tub and configured to drive the tub to rotate.

In this embodiment, since the washing machine according to the present disclosure includes the motor as described above, manufacturing cost of the washing machine can also be reduced, and stable operation of a driving device in the washing machine can be improved.

Specifically, the washing machine is a drum washing machine.

## Claims

1. A motor brush (1), comprising:
a brush holder (10) defining an accommodating chamber (102) and provided with a first fixing portion; and
a brush (20) partially located within the accommodating chamber (102) and provided with a second fixing portion, the first fixing portion being assembled with the second fixing portion such that the brush (20) is fixed on the brush holder (10) wherein the accommodating chamber (102) extends to an end of the brush holder (10) to define a first port;
the brush (20) comprises:
a carbon rod (202) having a first end extending out of the accommodating chamber (102) through the first port; and
a terminal (206) connected to a second end of the carbon rod (202) and being provided with the second fixing portion¹,
**characterized in that** the terminal (206) fixes the carbon rod (202), and a fixed connection with the brush holder (10) is implemented by the second fixing portion².

2. The motor brush (1) according to claim 1,
wherein the first fixing portion comprises a first engagement portion provided on an outer side wall of the brush holder (10);
wherein the second fixing portion comprises a second engagement portion defined by the terminal (206), either the first engagement portion or the second engagement portion is a snapping slot (1042), and the other of the first engagement portion and the second engagement portion is a snapping sheet structure engaged with the snapping slot (1042); and
wherein the first engagement portion is engaged with the second engagement portion such that the brush (20) is fixed on the brush holder (10).

3. The motor brush (1) according to claim 2,
wherein the accommodating chamber (102) extends to two ends of the brush holder (10) to define a second port at an other end of the brush holder (10);
wherein the brush holder (10) has a first outer side wall and a second outer side wall that are opposite to each other, at least either the first outer side wall or the second outer side wall being provided with a lateral boss (104), and wherein the snapping slot (1042) is provided on the lateral boss (104);
wherein the terminal (206) comprises a main sheet body (2062), and a tongue sheet structure (2064) formed by being bent relative to the main sheet body (2062), the main sheet body (2062) matching with the second port, and wherein the snapping sheet structure comprises an elastic snapping piece (2066) arranged on the tongue sheet structure (2064); and
wherein the tongue sheet structure (2064) is inserted into the corresponding snapping slot (1042) from an outer end face of the lateral boss (104) in such a manner that the elastic snapping piece (2066) is compressed, and wherein after the tongue sheet structure (2064) partially passes through the snapping slot (1042), the elastic snapping piece (2066) is restored and is limited by an inner end face of the lateral boss (104).

4. The motor brush (1) according to claim 3,
wherein the first outer side wall and the second outer side wall are both provided with the lateral boss (104); and
wherein the tongue sheet structure (2064) comprises a first tongue piece (2064a) and a second tongue piece (2064b) that are arranged on two sides of the main sheet body (2062), an angle formed between the first tongue piece (2064a) and the main sheet body (2062) being at least 90°, and/or an angle formed between the second tongue piece (2064b) and the main sheet body (2062) being at least 90°.

5. The motor brush (1) according to claim 3 or 4,
wherein the second port defines a terminal mounting groove (106); and
wherein the main sheet body (2062) is arranged within the terminal mounting groove (106), and the terminal (206) further comprises a limiting piece (2068) connected to the main sheet body (2062), the limiting piece (2068) extending towards a bottom surface of the terminal mounting groove (106).

6. The motor brush (1) according to any one of claims 3 to 5, wherein the main sheet body (2062) has an outer surface recessed inwardly relative to an outer end surface of the second port.

7. The motor brush (1) according to any one of claims 3 to 6, wherein at least either the first outer side wall or the second outer side wall is further provided with a lateral lug (108), the lateral lug (108) being arranged between the first port and the second port and, the lateral lug (108) being provided with a mounting through hole (1082), the mounting through hole (1082) being used for a connection with an external motor component.

8. The motor brush (1) according to any one of claims 1 to 7,
wherein the carbon rod (202) comprises a main body (2022) and a shaft (2024) that are connected to each other, the main body (2022) matching with the accommodating chamber (102) and extending to an outside of the accommodating chamber (102) through the first port, and the shaft (2024) connecting to the terminal (206); and
wherein the brush (20) further comprises an elastic member (204) sleeved on the shaft (2024) and disposed within the accommodating chamber (102) together with the shaft (2024).

9. The motor brush (1) according to any one of claims 1 to 8, wherein the brush holder (10) is provided with a toner baffle (110) close to the first port, and is provided with a terminal baffle (112) close to the second port.

10. The motor brush (1) according to any one of claims 1 to 9,
wherein the brush holder (10) is further provided with a heat dissipation hole (114), the heat dissipation hole (114) communicating with the accommodating chamber (102); and
wherein the heat dissipation hole (114) comprises at least a type of the followings: mesh holes, oblong holes and rectangular holes.

11. The motor brush (1) according to any one of claims 1 to 10, wherein the brush holder (10) is configured as a thermoset material member.

12. A motor, comprising:
a motor housing defining a mounting chamber, the motor housing comprising a motor end cover;
a motor body accommodated in the mounting chamber; and
a motor brush (1) according to any one of claims 1 to 11, the motor brush (1) being fixed on the motor end cover.

13. A washing machine, comprising:
a tub; and
a motor according to claim 12 connected to the tub, the motor driving the tub to rotate.

## Patentansprüche

1. Motorbürste (1), umfassend:
einen Bürstenhalter (10), der eine Aufnahmekammer (102) definiert und mit einem ersten Befestigungsbereich versehen ist; und
eine Bürste (20), die sich teilweise innerhalb der Aufnahmekammer (102) befindet und mit einem zweiten Befestigungsbereich versehen ist, wobei der erste Befestigungsbereich so mit dem zweiten Befestigungsbereich zusammengebaut ist, dass die Bürste (20) am Bürstenhalter (10) fixiert ist.
wobei sich die Aufnahmekammer (102) bis zu einem Ende des Bürstenhalters (10) erstreckt, um einen ersten Anschluss zu definieren;
die Bürste (20) Folgendes umfasst:
einen Kohlenstoffstab (202) aufweisend ein erstes Ende, das sich durch den ersten Anschluss aus der Aufnahmekammer (102) heraus erstreckt; und
eine Endstelle (206), die mit einem zweiten Ende des Kohlenstoffstabs (202) verbunden ist und mit dem zweiten Befestigungsbereich versehen ist,
**dadurch gekennzeichnet, dass** der Endbereich (206) den Kohlenstoffstab (202) fixiert, und eine fixierte Verbindung mit dem Bürstenhalter (10) durch den zweiten Befestigungsbereich implementiert ist.

2. Motorbürste(1) gemäß Anspruch 1,
wobei der erste Befestigungsbereich einen ersten Eingriffsbereich umfasst, der an einer äußeren Seitenwand des Bürstenhalters (10) vorgesehen ist;
wobei der zweite Befestigungsbereich einen zweiten Eingriffsbereich umfasst, der durch die Endstelle (206) definiert wird, entweder der erste Eingriffsbereich oder der zweite Eingriffsbereich ein Schnappschlitz (1042) ist und der andere des ersten Eingriffsbereichs und des zweiten Eingriffsbereichs eine Schnappblechstruktur ist, die mit dem Schnappschlitz (1042) in Eingriff steht; und
wobei der erste Eingriffsbereich mit dem zweiten Eingriffsbereich so in Eingriff steht, dass die Bürste (20) am Bürstenhalter (10) fixiert ist.

3. Motorbürste (1) gemäß Anspruch 2,
wobei sich die Aufnahmekammer (102) bis zu zwei Enden des Bürstenhalters (10) erstreckt, um einen zweiten Anschluss an einem anderen Ende des Bürstenhalters (10) zu definieren;
wobei der Bürstenhalter (10) eine erste äußere Seitenwand und eine zweite äußere Seitenwand aufweist, die einander gegenüberliegen, wobei mindestens entweder die erste äußere Seitenwand oder die zweite äußere Seitenwand mit einem seitlichen Vorsprung (104) versehen ist, und wobei der Schnappschlitz (1042) am seitlichen Vorsprung (104) vorgesehen ist;
wobei die Endstelle (206) einen Hauptblechkörper (2062) und eine Zungenblechstruktur (2064) umfasst, die durch Biegen relativ zum Hauptblechkörper (2062) ausgebildet ist, wobei der Hauptblechkörper (2062) mit dem zweiten Anschluss zusammenpasst, und wobei die Schnappblechstruktur ein elastisches Schnappstück (2066) umfasst, das an der Zungenblechstruktur (2064) angeordnet ist; und
wobei die Zungenblechstruktur (2064) in den entsprechenden Schnappschlitz (1042) von einer äußeren Endfläche des seitlichen Vorsprungs (104) derart eingeführt wird, dass das elastische Schnappstück (2066) zusammengedrückt wird, und wobei die Zungenblechstruktur (2064) teilweise durch den Schnappschlitz (1042) hindurchgeht, das elastische Schnappstück (2066) wiederhergestellt wird und durch eine innere Endfläche des seitlichen Vorsprungs (104) begrenzt ist.

4. Motorbürste (1) gemäß Anspruch 3,
wobei die erste äußere Seitenwand und die zweite äußere Seitenwand beide mit dem seitlichen Vorsprung (104) versehen sind; und
wobei die Zungenblechstruktur (2064) ein erstes Zungenstück (2064a) und ein zweites Zungenstück (2064b) umfasst, die auf zwei Seiten des Hauptblechkörpers (2062) angeordnet sind, ein zwischen dem ersten Zungenstück (2064a) und dem Hauptblechkörper (2062) ausgebildeter Winkel mindestens 90° beträgt, und/oder ein zwischen dem zweiten Zungenstück (2064b) und dem Hauptblechkörper (2062) gebildeter Winkel mindestens 90° beträgt.

5. Motorbürste (1) gemäß Anspruch 3 oder 4,
wobei der zweite Anschluss eine Endstellenmontagenut (106) definiert; und
wobei der Hauptblechkörper (2062) innerhalb der Endstellenmontagenut (106) angeordnet ist und die Endstelle (206) weiterhin ein mit dem Hauptblechkörper (2062) verbundenes Begrenzungsstück (2068) umfasst, wobei sich das Begrenzungsstück (2068) in Richtung einer Bodenfläche der Endstellenmontagenut (106) erstreckt.

6. Motorbürste (1) gemäß einem der Ansprüche 3 bis 5, wobei der Hauptblechkörper (2062) eine äußere Fläche aufweist, die relativ zu einer äußeren Endfläche des zweiten Anschlusses nach innen vertieft ist.

7. Motorbürste (1) gemäß einem der Ansprüche 3 bis 6, wobei zumindest entweder die erste äußere Seitenwand oder die zweite äußere Seitenwand ferner mit einem seitlichen Ansatz (108) versehen ist, wobei der seitliche Ansatz (108) zwischen dem ersten Anschluss und dem zweiten Anschluss angeordnet ist, und wobei der seitliche Ansatz (108) mit einem Montagedurchgangsloch (1082) versehen ist, wobei das Montagedurchgangsloch (1082) für eine Verbindung mit einer externen Motorkomponente verwendet wird.

8. Motorbürste (1) gemäß einem der Ansprüche 1 bis 7,
wobei der Kohlenstoffstab (202) einen Hauptkörper (2022) und eine Welle (2024) umfasst, die miteinander verbunden sind, wobei der Hauptkörper (2022) mit der Aufnahmekammer (102) zusammenpasst und sich durch den ersten Anschluss zu einer Außenseite der Aufnahmekammer (102) erstreckt, und die Welle (2024) mit der Endstelle (206) verbunden ist; und
wobei die Bürste (20) ferner ein elastisches Element (204) umfasst, das über die Welle (2024) gestülpt ist und sich zusammen mit der Welle (2024) in der Aufnahmekammer (102) befindet.

9. Motorbürste (1) gemäß einem der Ansprüche 1 bis 8, wobei der Bürstenhalter (10) mit einer Tonerablenkplatte (110) nahe dem ersten Anschluss versehen ist und mit einer Endstellenablenkplatte (112) nahe dem zweiten Anschluss versehen ist.

10. Motorbürste (1) gemäß einem der Ansprüche 1 bis 9,
wobei der Bürstenhalter (10) ferner mit einem Wärmeableitungsloch (114) versehen ist, wobei das Wärmeableitungsloch (114) mit der Aufnahmekammer (102) in Verbindung steht; und
wobei das Wärmeableitungsloch (114) mindestens eine der folgenden Arten umfasst: Maschenlöcher, Langlöcher und Rechtecklöcher.

11. Motorbürste (1) gemäß einem der Ansprüche 1 bis 10, wobei der Bürstenhalter (10) als Bauteil aus duroplastischem Material konfiguriert ist.

12. Motor, umfassend:
ein Motorgehäuse, das eine Montagekammer definiert, wobei das Motorgehäuse eine Motorendabdeckung umfasst;
einen Motorkörper, der in der Montagekammer aufgenommen ist; und
eine Motorbürste (1) gemäß einem der Ansprüche 1 bis 11, wobei die Motorbürste (1) an der Motorendabdeckung fixiert ist.

13. Waschmaschine, umfassend:
eine Trommel; und
einen Motor gemäß Anspruch 12, der mit der Trommel verbunden ist, wobei der Motor die Trommel antreibt, sich zu drehen.

## Revendications

1. Balai de moteur (1), comprenant :
un porte-balai (10) définissant une chambre de réception (102) et pourvu d'une première partie de fixation ; et
un balai (20) partiellement situé à l'intérieur de la chambre de réception (102) et doté d'une deuxième partie de fixation, la première partie de fixation étant assemblée avec la deuxième partie de fixation de telle sorte que le balai (20) soit fixé sur le porte-balai (10), dans lequel la chambre de réception (102) s'étend jusqu'à une extrémité du porte-balai (10) pour définir un premier orifice ;
le balai (20) comprend :
une tige de carbone (202) ayant une première extrémité s'étendant hors de la chambre de réception (102) via le premier port ; et
une borne (206) connectée à une deuxième extrémité de la tige de carbone (202) et étant dotée de la deuxième partie de fixation,
**caractérisé en ce que** la borne (206) fixe la tige de carbone (202), et une connexion fixe avec le porte-balai (10) est mise en oeuvre par la deuxième partie de fixation.

2. Balai de moteur (1) selon la revendication 1, dans lequel la première partie de fixation comprend une première partie de mise en prise prévue sur une paroi latérale externe du porte-balai (10) ;
dans lequel la deuxième partie de fixation comprend une deuxième partie de mise en prise définie par la borne (206), soit la première partie de mise en prise, soit la deuxième partie de mise en prise est une fente d'encliquetage (1042), et l'autre de la première partie de mise en prise et de la deuxième partie de mise en prise est une structure de feuille d'encliquetage en prise avec la fente d'encliquetage (1042) ; et
dans lequel la première partie de mise en prise est en prise avec la deuxième partie de mise en prise de telle sorte que le balai (20) soit fixé sur le porte-balai (10).

3. Balai de moteur (1) selon la revendication 2,
dans lequel la chambre de réception (102) s'étend jusqu'à deux extrémités du porte-balai (10) pour définir un deuxième orifice à une autre extrémité du porte-balais (10) ;
dans lequel le porte-balai (10) présente une première paroi latérale externe et une deuxième paroi latérale externe qui sont opposées l'une à l'autre, au moins la première paroi latérale externe ou la deuxième paroi latérale externe étant dotée d'un bossage latéral (104), et dans lequel la fente d'encliquetage (1042) est prévue sur le bossage latéral (104) ;
dans lequel la borne (206) comprend un corps de feuille principal (2062) et une structure de feuille à languette (2064) formée en étant pliée par rapport au corps de feuille principal (2062), le corps de feuille principal (2062) correspondant au deuxième port, et dans lequel la structure de feuille d'encliquetage comprend une pièce d'encliquetage élastique (2066) agencée sur la structure de feuille à languette (2064) ; et
dans lequel la structure de feuille à languette (2064) est insérée dans la fente d'encliquetage correspondante (1042) à partir d'une face d'extrémité externe du bossage latéral (104) de telle manière que la pièce d'encliquetage élastique (2066) soit comprimée, et dans lequel après que la structure de feuille à languette (2064) passe partiellement à travers la fente d'encliquetage (1042), la pièce d'encliquetage élastique (2066) est restaurée et est limitée par une face d'extrémité interne du bossage latéral (104).

4. Balai de moteur (1) selon la revendication 3,
dans lequel la première paroi latérale externe et la deuxième paroi latérale externe sont toutes deux dotées du bossage latéral (104) ; et
dans lequel la structure de feuille à languette (2064) comprend une première pièce à languette (2064a) et une deuxième pièce à languette (2064b) qui sont disposées sur deux côtés du corps de feuille principal (2062), un angle étant formé entre la première pièce à languette (2064a) et le corps de feuille principal (2062) étant d'au moins 90°, et/ou un angle formé entre la deuxième languette (2064b) et le corps de feuille principal (2062) étant d'au moins 90°.

5. Balai de moteur (1) selon la revendication 3 ou 4,
dans lequel le deuxième orifice définit une rainure de montage de borne (106) ; et
dans lequel le corps de feuille principal (2062) est disposé à l'intérieur de la rainure de montage de borne (106), et la borne (206) comprend en outre une pièce de limitation (2068) raccordée au corps de feuille principal (2062), la pièce de limitation (2068) s'étendant vers une surface inférieure de la rainure de montage de borne (106).

6. Balai de moteur (1) selon une quelconque des revendications 3 à 5, dans lequel le corps de feuille principal (2062) a une surface externe en retrait vers l'intérieur par rapport à une surface d'extrémité externe du deuxième orifice.

7. Balai de moteur (1) selon une quelconque des revendications 3 à 6, dans lequel au moins soit la première paroi latérale externe, soit la deuxième paroi latérale externe est en outre dotée d'une ergot latéral (108), l'ergot latéral (108) étant disposé entre le premier orifice et le deuxième orifice et l'ergot latéral (108) étant dotée d'un trou traversant de montage (1082), le trou traversant de montage (1082) étant utilisé pour une connexion avec un composant de moteur externe.

8. Balai de moteur (1) selon une quelconque des revendications 1 à 7,
la tige de carbone (202) comprenant un corps principal (2022) et un arbre (2024) qui sont reliés l'un à l'autre, le corps principal (2022) correspondant à la chambre de réception (102) et s'étendant vers l'extérieur de la chambre de réception (102) à travers le premier orifice et l'arbre (2024) se raccordant au terminal (206) ; et
dans lequel le balai (20) comprend en outre un élément élastique (204) emmanché sur la tige (2024) et disposé à l'intérieur de la chambre de réception (102) avec l'arbre (2024).

9. Balai de moteur (1) selon une quelconque des revendications 1 à 8, dans lequel le porte-balai (10) est pourvu d'un déflecteur de toner (110) à proximité du premier port, et est pourvu d'un déflecteur de borne (112) à proximité du deuxième port.

10. Balai de moteur (1) selon une quelconque des revendications 1 à 9,
dans lequel le porte-balai (10) est en outre pourvu d'un trou de dissipation thermique (114), le trou de dissipation thermique (114) communiquant avec la chambre de réception (102); et
le trou de dissipation de chaleur (114) comprenant au moins un type des éléments suivants : trous maillés, trous oblongs et trous rectangulaires.

11. Balai de moteur (1) selon une quelconque des revendications 1 à 10, dans lequel le porte-balai (10) est configuré comme un élément en matériau thermodurci.

12. Moteur, comprenant :
un carter de moteur définissant une chambre de montage, le carter de moteur comprenant un couvercle d'extrémité de moteur;
un corps de moteur renfermé dans la chambre de montage ; et
un balai de moteur (1) selon une quelconque des revendications 1 à 11, le balai de moteur (1) étant fixé sur le couvercle d'extrémité du moteur.

13. Machine à laver, comprenant :
une cuve ; et
un moteur selon la revendication 12 connecté à la cuve, le moteur entraînant la cuve en rotation.
